Europäisches Patentamt

(19) European Patent Office

Office européen des brevets

(11) Numéro de publication: **0 057 642 B1**

(12) **FASCICULE DE BREVET EUROPEEN**

(45) Date de publication du fascicule du brevet:
**02.05.85**

(21) Numéro de dépôt: **82400155.6**

(22) Date de dépôt: **28.01.82**

(51) Int. Cl.⁴: **B 07 B 9/00,** B 03 B 9/06, B 02 C 23/00

(54) Procédé pour l'épuration du verre de récupération.

(30) Priorité: **28.01.81 FR 8101563**

(43) Date de publication de la demande:
**11.08.82 Bulletin 82/32**

(45) Mention de la délivrance du brevet:
**02.05.85 Bulletin 85/18**

(84) Etats contractants désignés:
**AT BE CH DE FR GB IT LI LU NL SE**

(56) Documents cités:
**DE - A - 2 638 608**
**FR - A - 2 149 493**
**FR - A - 2 320 783**
**US - A - 3 650 396**

(73) Titulaire: **SAINT-GOBAIN EMBALLAGE, Les
Miroirs 18, Avenue d'Alsace, F-92400 Courbevole (FR)**

(72) Inventeur: **Genestie, Paul, 52, rue du Vieux Pont,
F-92000 Nanterre (FR)**

(74) Mandataire: **Eudes, Marcel et al, Saint-Gobain
Recherche 39 Qual Lucien Lefranc, F-93304 Aubervilliers
Cedex (FR)**

## Description

De nombreuses industries cherchent actuellement à réutiliser les produits usagés de leurs fabrications. L'industrie du verre creux en particulier s'efforce d'introduire dans les charges de fusion verrière une certaine proportion de calcin de récupération provenant du ramassage et du broyage de bouteilles et autres récipients en verre.

Une telle opération risque toujours de compromettre la qualité de fabrication. Dans le cas de l'industrie du verre, le fait que le verre récolté n'ait pas une composition uniforme ne limite par réellement le taux de calcin qu'il est possible d'incorporer aux charges. La difficulté majeure résulte de ce que les produits récupérés renferment une proportion non négligeable de corps étrangers provenant du ramassage et surtout des manipulations successives, en particulier des pierres ou débris de poterie infusibles, susceptibles de donner un pourcentage inacceptable de défauts de pâte. Il est donc indispensable d'en effectuer le tri.

D'autre part, la récupération n'est possible qui si le prix de revient en est acceptable. Il en résulte qu'il est tout à fait impossible de récupérer le verre par triage d'ordures ménagères provenant d'une collecte normale. Enfin, les verriers ne peuvent que très exceptionnellement créer des circuits exclusifs de ramassage. Pour réunir des tonnages suffisants, on est donc obligé de confier aux organismes de ramassage habituels des collectes spéciales effectuées avec leurs moyens ordinaires, qui sont stockées sur parc de dont le produit est régulièrement livré aux usines verrières.

Le verre ainsi rassemblé, par suite des nombreuses manipulations subies dans des conditions de propreté précaires, ne renferme plus que très peu d'articles intacts et est essentiellement constitué de fragments ou tessons de dimensions variables, souillés par des quantités non négligeables de morceaux légers, tels que débris d'emballages, étiquettes, papiers divers ou capsules en matières plastiques, d'éléments en métaux non ferreux, plomb, étain, aluminium provenant essentiellement eux aussi, du capsulage, ou d'autres impuretés introduites principalement lors des stockages intermédiaires, telles que des pièces ou débris en métaux non ferreux, des pierres, voire des objets plus volumineux de nature diverse.

Même lors d'une collecte directe faite dans les meilleures conditions de propreté, il est d'ailleurs impossible d'éviter toute présence de corps étrangers, ne serait-ce que par suite de l'existence de divers éléments d'emballage présents dès le départ avec les produits verriers proprement dits. On ne peut donc se contenter de broyer purement et simplement cette matière première et il reste nécessaire de l'épurer.

La publication de brevet DE-A-26 38 608 propose, après avoir isolé et broyé une sorte de verre donnée, d'en éliminer les impuretés métalliques par tri magnétique puis par criblage. A moins de disposer d'un produit récupéré dans des conditions de propreté tout à fait exceptionnelles, l'efficacité d'un tel procédé repose essentiellement sur celle du tri initial, en l'occurrence un tri optique, visuel et manuel. Il s'agira pourtant d'une opération qui présente un caractère aléatoire, en raison des défaillances toujours possibles des opérateurs, et assez coûteuse car il faut, pour parvenir à un taux d'impuretés acceptable, effectuer en série plusieurs passages successifs dont le rendement vis-à-vis des produits à éliminer est sensiblement constant, mais dont l'efficacité absolue diminue.

Le brevet US-A-3 650 396 propose d'opérer essentiellement par voie gravitaire, le tri principal s'effectuant, après broyage et sur la fraction de 6 à 18 mm environ obtenue par criblage, par élutriation, dans des colonnes où un courant d'air ascendant sépare le verre des pierres et particules métalliques. Un tri optique automatique final permet de séparer verre blanc et verre coloré.

Sans préjuger de son efficacité sur des particules de densités voisines, il est possible de dire qu'il s'agit, en tout état de cause, d'un procédé coûteux en énergie et qui conduit à sacrifier, sinon parmi les morceaux grossiers supérieurs à 18 mm, du moins parmi les fines inférieures à 6 mm une part non négligeable du verre. Celui-ci pourrait encore être récupéré par flottation, par exemple en s'inspirant des enseignements des brevets FR-A-2 149 493 ou FR-A-2 320 783, mais à grand prix et sous une forme trop fine pour que l'on puisse sans inconvénient la réintroduire en quantités notables dans les fours de fusion verrière.

L'invention a pour objet un procécédé essentiellement mécanique, destiné à supprimer au moins en partie le tri manuel, comme à le faciliter et à en améliorer le rendement dans la mesure où il subsiste. Elle propose un procédé selon la revendication 1.

On sépare avantageusement quatre tranches distinctes au moins:
– T1: les fines, qui requièrent un traitement particulier,
– T2: la tranche médiane inférieure,
– T3: la tranche médiane supérieure,
– T4: les morceaux grossiers facilement récupérables,et, après un tri manuel éventuel, on traite essentiellement les tranches médianes par un broyage ménagé suivi d'un criblage en trois fractions:
– une fraction inférieure utilisable,
– une fraction supérieure à rejeter,
– une fraction moyenne à traiter plus complètement.

Avantageusement, la fraction moyenne de la tranche médiane supérieure est remélangée à la tranche médiane inférieure avant traitement de cette dernière.

La sélectivité du criblage et le choix des limites des fractions de tri sont directement liés, comme on le verra ci-dessous, aux conditions de broyage et essentiellement à la vitesse des broyeurs, ainsi bien entendu qu'au temps de séjour du matériau dans ces derniers, C-est-à-dire à leur débit.

Les schémas qui figurent en annexe font apparaître en détail la succession de traitements qui vient d'être décrite.

La figure 1 montre de façon simplifeé la constitution d'une installation de broyage et de tri conforme à l'invention, avec la répartition approximative des tonnages pour cent et les teneurs relatives en impuretés pour mille.

La figure 2 en constitue le diagramme de fonctionnement.

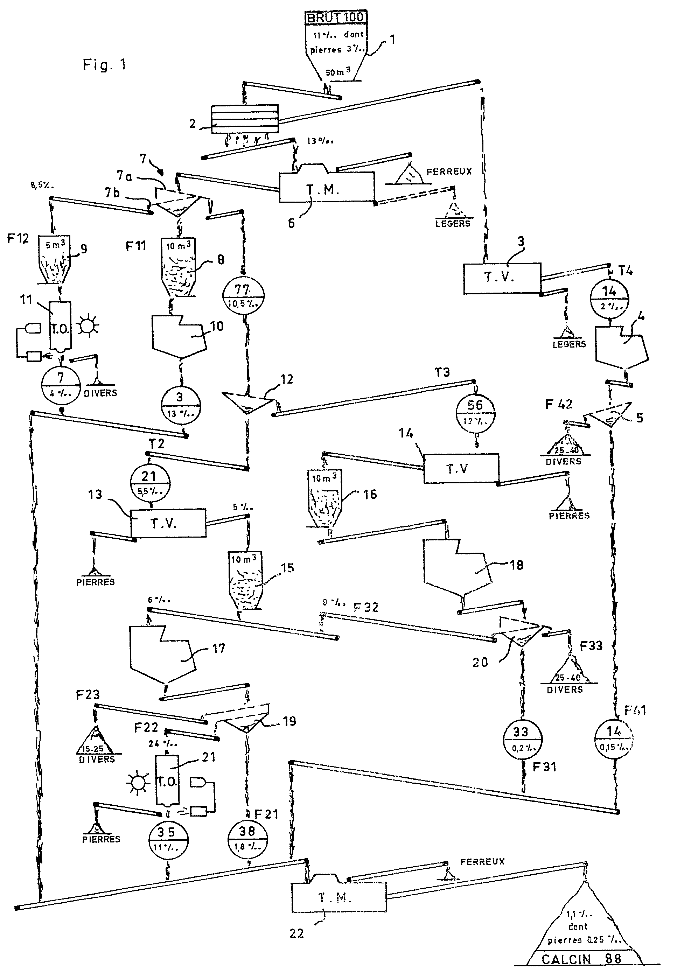

On peut voir sur la figure 1 que la charge brute délivrée par la trémie 1 subit un premier criblage permettant de séparer les bouteilles ou autres articles entiers et tessons de grandes dimensions. L'opération peut s'effectuer commodément sur un crible constitué d'une grille 2 à barreaux divergents qui arrête les éléments dont les dimensions minimales sont supérieures à 40 mm environ.

Les gros morceaux, arrêtés par la grille 2, représentent, de façon typique, 15% au plus du tonnage traité. Ils peuvent être récupérés très directement après un contrôle visuel permettant l'élimination manuelle des corps étrangers importants au poste de tri manuel 3, grâce à un broyage sélectif effectué dans un broyeur 4 et suivi d'un criblage en deux fractions sur un crible 5, à savoir:

– F41, de 0 à 25 mm, utilisable,

– F42, de 25 à 40 mm, à rejeter.

Le broyage s'effectuera avantageusement sur un concasseur ou plus précisément un granulateur à mâchoires et le criblage sur un tamis vibrant.

Le reste de la charge passe sur un tapis magnétique 6 où les produits ferreux sont à peu près totalement éliminés, puis est envoyé sur un crible 7 comprenant une grille 7a, dont la maille est de l'ordre de 10 mm et une grille 7b d'une maille de 5 mm environ.

Les fines T1, inférieures à 10 mm, et traversant donc la grille 7a représentent pour leur un peu moins de 10% du tonnage, avec une teneur en verre au moins égale à celle du matériau initial. Elles se trouvent séparées sur la grille 7b en deux fractions distinctes:

– F11, de 0 à 5 mm,

– F12, de 5 à 10 mm,

toutes deux facilement récupérables, qui sont stockées dans les trémies 8 et 9, puis traitées périodiquement.

La fraction F11, soit un peu moins de 3% des produits ramassés, est rendue utilisable par simple réduction à moins de 2 mm dans le broyeur 10. La fraction F12, représente près de 7% de la collecte; son étroitesse et par conséquent l'homogénéité des particules qui la constituent ainsi que la relativement faible quantité à traiter permettent de la trier optiquement au poste 11 à l'aide d'un appareil de tri automatique. Celui-ci élimine la quasi-totalité des pierres, mais aussi une fraction non négligeable du verre; si la charge de travail le permet, 90% environ de ce verre peuvent être récupérés ultérieurement, par un second passage sur l'appareil, sans réintroduire dans le calcin une quantité appréciable de pierres.

La coupe centrale M, refusée par la grille 7a et constituée de morceaux compris entre 10 et 40 mm environ, ou plus en ce qui concerne leur plus grande dimension, peut représenter jusqu'à 80% du tonnage. Le pourcentage de corps étrangers, notamment de pierres ou autres produits infusibles très préjudiciables à la fusion qu'elle renferme est peu inférieure au pourcentage initial. Elle est divisée par criblage sur un crible 12, comme a été dit, en plusieurs tranches traitées parallèlement. En pratique, le mieux est d'effectuer une coupe en deux tranches T2 et T3 dont les limites de granulométrie se trouvent sensiblement dans une progression géométrique de raison voisine de 2, à savoir d'une part 10 à 20 mm, d'autre part 20 à 40 mm.

En principe, ces deux tranches subissent chacune, l'une au poste 13, l'autre au poste 14, un contrôle visuel avec tri manuel limité à l'extraction des infusibles ce qui en améliore le rendement sur ce poste. La tranche médiane inférieure T2 représente près de 20% du tonnage initial; la tranche médiane supérieure T3, plus chargée en impuretés et particulièrement en produits infusibles, représente une proportion inférieure à 60% de ce tonnage initial mais, en raison de la taille des morceaux qu'elle renferme, le travail des opérateurs chargés d'effectuer le contrôle visuel et de trier à la main les fragments infusibles repérés est sensiblement comparable pour chacune des deux fractions. Dans ces conditions, le tri. limité à ces pierres et aux produits infusibles, a de part et d'autre une efficacité théorique supérieure à 70%.

Chacune des deux tranches médianes est ensuite stockée dans und trémie de régulation du débit, respectivement les trémies 15 et 16, afin d'être soumise au broyage sélectif, effectué à débit constant dans les deux concasseurs respectifs 17 et 18. Il s'agit de concasseurs à percussion ou à impact, c'est-à-dire constitués d'un rotor à ailettes projetant les morceaux du produit à traiter contre un certain nombre de lames transversales placées à l'intérieur de leur cuve.

Le broyage est effectué à vitesse de rotation modérée, avec un entrefer convenable, de l'ordre de grandeur de la dimension moyenne des morceaux à broyer, et d'une manière générale le débit d'alimentation sera quelque peu inférieur au débit nominal attribué au concasseur par le fabriquant pour ses usages habituels, c'est-à-dire essentiellement le broyage des minerais.

Les deux tranches médianes sont ensuite criblées chacune en trois fractions respectives sur les cribles à deux étages 19 et 20.

De préférence, en ce qui concerne la plus forte des deux, T3, le criblage pourra s'effectuer en trois fractions dont les limites sont à nouveau dans une proportion géométrique de raison voisine de 2, à savoir sensiblement:

– la fraction F31, de 0 à 10 mm, qui représente environ un tiers du tonnage initial et se trouve directement utilisable.

– la fraction F32, de 10 à 25 mm, représentant un peu plus de 20% du tonnage, de granulométrie et de composition sensiblement analogues à celles de la plus faible des deux tranches médianes, T2,

– enfin une fraction F33, de 25 à 40 mm, qui constitue seulement 1% du tonnage initial, mais contient près de 35% d'impuretés et qui doit donc être rejetée.

En raison de ses caractéristiques, la fraction F32, de 10 à 25 mm, doit être à nouveau triée; elle sera avantageusement mélangée à la tranche médiane la plus faible, T2, et c'est l'ensemble qui sera soumis à un broyage sélectif, suivi d'un nouveau criblage en trois fractions. Le tonnage à traiter lors de ce second broyage est donc assez peu inférieur à celui qui faisait l'objet du broyage précédent; ceci permet en fait d'utiliser deux broyeurs de capacité identique.

De façon avantageuse, les limites des fracations choisies correspondront à une progression géométrique de l'ordre de 1,5 environ:

– la fraction F21, de 0 à 10 mm, constitue près de 40% du tonnage initial et est suffisamment propre pour pouvoir être directement utilisée,

– la fraction F22, de 10 à 15 mm, n'en représente que 4% environ; comme c'était le cas pour la fraction F12, son étroitesse ainsi que la faible quantité à traiter permettront de la trier optiquement au poste 21 à l'aide d'un appareil de tri automatique, dans les mêmes conditions qu'au poste 11,

– enfin, la fraction F23, de 15 à 25 mm, qui représente 1% du tonnage initial renferme jusqu'à 15% de corps étrangers; elle est à nouveau à éliminer.

En fin de traitement, les diverses fractions récupérées sont regroupées et envoyées sur un appareil de tri magnétique 22 estiné à éliminer les particules métalliques apportées par l'usure des broyeurs.

Il a été précisé plus haut que la sélectivité du criblage et le choix des coupes à effectuer pour l'obtenir dépendent de la qualité du broyage c'est-à-dire des conditions opératoires.

Le tableau 1 en annexe donne pour chacune des deux tranches T2 (10 à 20 mm) et T3 (20 à 40 mm) trois exemples de répartition des granulométries en fonction des vitesses périphériques des rotors (en m/s, sur des broyeurs de type $AP_o$ de la société HAZEMAG employés au débit de 2,5 t/h) et de l'entrefer (en cm, et qui apparaît ici comme un critère secondaire). Pour chacune des tranches, les conditions opératoires choisies dans l'exemple illustré plus haut correspondent respectivement à celles des essais repérés 22 et 32.

D'autres coupes que celles nommées ci-dessus sont donc possibles mais, sur des produits courants, ces dernières correspondent expérimentalement au meilleur compromis d'équilibrage et de rendement du tri mécanique.

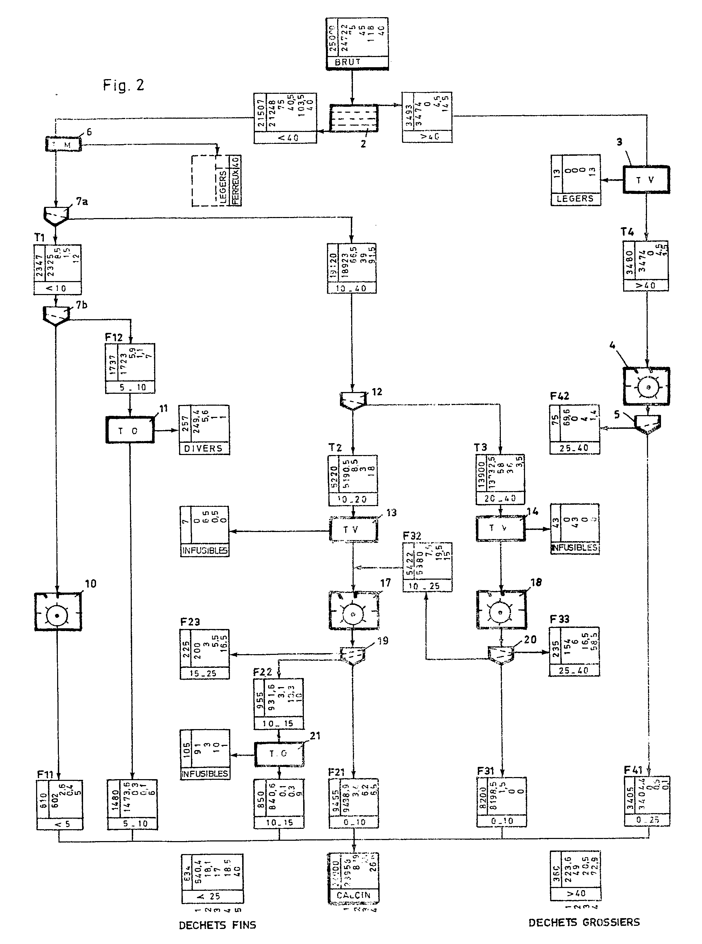

La figure 2 montre la façon dont les différents constituants du calcin initial se répartissent, dans l'exemple qui vient d'être donné, entre les diverses fractions récupérables ou à èliminer.

Ces constituants ont été classées, selon les explications données plus haut, en cinq catégories:

1 – verre,
2 – infusibles,
3 – non ferreux,
4 – produits légers,
5 – matériaux ferreux.

La distribution du tonnage total et sa répartition en catégories ont été indiquées dans les différentes cases du diagramme, en colonnes successives, 0 à 5, rangées dans un ordre constant et récapitulées en bas du tableau. Les matériaux ferreux, éliminés au début de l'opération par le tri magnétique annexe, n'apparaissent que dans le haut du schéma.

Les tonnages indiqués correspondent au traitement de 25 tonnes de verre de récupération. Ils ont été chiffrés à partir de mesures effectuées au stade d'une installation pilote sur des échantillons expérimentaux correspondant au traitement de deux tonnes de produit, en employant les concasseurs HAZEMAG de type $AP_o$ précités. Les teneurs en verre ont été déterminées par différence.

Le tableau ci-dessous résume les résultats obtenus:

Verre récupéré dans la fraction traitée par broyage sélectif: 98%

| Impuretés Eliminées Infusibles | sans tri manuel | avec tri manuel |
|---|---|---|
| Infusibles | 70% | 92,5% |
| Non ferreux | 85% | 85% |
| Légers | 84% | 84% |
| Ferreux | 100% | 100% |

On peut ainsi se rendre compte que l'invention fournit un procédé de tri mécanique d'une sécurité et d'une efficacité qui ne pourraient être atteintes en tri manuel qu'en plusieurs étapes, au prix d'un travail pénible d'une main d'œuvre abondante; son emploi, seul ou en combinaison avec un tri manuel selon l'état de proreté c'est-à-dire, en fait, le mode de ramassage des produits récupérés permet d'introduire dans la fusion du verre creux des quantités de calcin susceptibles de dépasser 50% de la charge.

Il est facile de comprendre que l'on peut, sans s'écarter de son principe, apporter au processus décrit des variantes diverses et notamment, après élimination des fines et morceaux grossiers, imaginer de diviser la portion centrale de la charge en plus de deux tranches partiellement renvoyées vers les tranches inférieures après broyage. Il est notamment possible, dans les cas favorables, de supprimer les tris manuels précédent les broyages sélectifs: c'est le cas, par exemple, si la proportion de calcin à incorporer à la fusion est relativement faible, ou si l'on part des produits bruts d'une collecte directe effectuée avec soin; d'autres fois, on pourra envisager de placer certains de ces tris en aval des broyages. On peut encore compléter le tri magnétique effectué au poste 6 ou le traitement des fines par une aspiration des produits légers, possibilité avantageuse bien qu'elle n'ait pas été prise en compte dans les bilans ci-dessus, traiter éventuellement les deux fractions F12 et F22 sur un même appareil automatique de tri optique, recycler la fraction F42 vers la tranche T3 dans la trémie 16, etc . . .

Il est aussi intéressant de noter qu'une meilleure

sélectivité de la séparation de la fraction F23 peut être obtenue sur la grille supérieure du crible 19 si cette grille possède des mailles en forme de fentes transversales à son inclinaison, d'une dimension de 10 mm × 25 mm par exemple.

TABLEAU 1 Conditions de broyage

Repartition granulométrique en % cumulés (valeurs arrondies)

| Tranche 10–20 Fraction % cumulés | Essai 21 vitesse 17 m/s, | | entrefer 1 cm | | Essai 22 vitesse 12 m/s, | | entrefer 1 cm | | Essai 23 vitesse 12 m/s, | | entrefer 3 cm | |
|---|---|---|---|---|---|---|---|---|---|---|---|---|
| | verre | pierres | non ferreux | légers | verre | pierres | non ferreux | légers | verre | pierres | non ferreux | légers |
| 15–20 | 0,33 | 0 | 39 | 39 | 1 | 22 | 22 | 59 | 2 | 34 | 24 | 50 |
| 10–15 | 4 | 31 | 72 | 72 | 9 | 59 | 76 | 70 | 10 | 64 | 71 | 80 |
| 8–10 | 11 | 68 | 89 | 89 | 24 | 82 | 92 | 73 | 29 | 83 | 93 | 90 |
| 3– 8 | 54 | 100 | 100 | 100 | 72 | 100 | 100 | 99,9 | 74 | 100 | 100 | 100 |
| 0,63– 3 | 89 | | | | 94 | | | | 95 | | | |
| 0,63 | 100 | | | | 100 | | | | 100 | | | |

| Tranche 20–40 Fraction % cumulés | Essai 31 vitesse 12 m/s, | | entrefer 1 cm | | Essai 32 vitesse 8 m/s, | | entrefer 1 cm | | Essai 33 vitesse 8 m/s, | | entrefer 5 cm | |
|---|---|---|---|---|---|---|---|---|---|---|---|---|
| | verre | pierres | non ferreux | léger | verre | pierres | non ferreux | légers | verre | pierres | non ferreux | légers |
| 30–40 | 0 | 0 | 2 | 40 | 0,15 | 27 | 10 | 31 | 0,2 | 13 | 20 | 44 |
| 25–30 | 0,4 | 15 | 23 | 80 | 1 | 40 | 46 | 80 | 2 | 50 | 46 | 84 |
| 20–25 | 1 | 26 | 49 | 88 | 4 | 57 | 64 | 95 | 7 | 60 | 70 | 94 |
| 15–20 | 5 | 54 | 74 | 96 | 18 | 76 | 99 | 99 | 27 | 79 | 97 | 98 |
| 10–15 | 17 | 72 | 84 | 97 | 40 | 89 | 99,9 | 100 | 48 | 87 | 98 | 99 |
| 8–10 | 36 | 84 | 88 | 99 | 60 | 95 | | | 66 | 95 | 99 | |
| 3– 8 | 77 | 98 | 99,99 | 100 | 87 | 100 | | | 90 | 100 | | |
| 0,63– 3 | 96 | | | | 97 | | | | 99 | | | |
| 0,63 | 100 | | | | 100 | | | | 100 | | | |

0 057 642

# Revendications

1. Procédé d'épuration de verre de récupération, pour l'élaboration de calcin par broyage, criblage à sec, tri magnétique et tri optique éventuel, caractérisé en ce qu'après séparation des fines et des morceaux grossiers, on divise la partie médiane de la charge brute en plusieurs tranches granulométriques sur chacune desquelles on effectue séparément le boyage puis le criblage, ledit broyage étant effectué d'une façon ménagée qui permet de séparer lors du criblage:
   - une fraction inférieure utilisable,
   - une fraction supérieure à rejeter,
   - une fraction moyenne à traiter plus complètement.

2. Procédé selon la revendication 1, caractérisé en ce que les tranches médianes sont au nombre de deux, et qu'un tri optique manuel des infusibles est effectué sur chacune d'elles avant broyage et criblage.

3. Procédé selon la revendication 2, caractérisé en ce que la tranche médiane supérieure est criblée après broyage en trois fractions de granulométries respectives 0 à 10 mm, 10 à 25 mm, 25 à 40 mm, et la tranche médiane inférieure en trois fractions de granulométries respectives 0 à 10 mm, 10 à 15 mm, 15 à 25 mm.

4. Procédé selon la revendication 3, caractérisé en ce que la fraction moyenne de la tranche médiane supérieure est remélangée à la tranche médiane inférieure entre le tri optique et le broyage puis le criblage de cette dernière.

5. Procédé selon l'une des revendications 3 et 4, caractérisé en ce que la fraction moyenne de la tranche médiane inférieure est épurée par tri optique.

6. Procédé selon l'une des revendications précédentes, caractérisé en ce que les morceaux grossiers sont récupérés après un broyage ménagé suivi d'un criblage en deux fractions, la fraction inférieure utilisable et la fraction supérieure à rejeter.

7. Procédé selon la revendication 6, caractérisé en ce que les fines sont récupérées en deux fractions, la fraction inférieure broyée à moins de 2 mm, la fraction supérieure épurée par tri optique.

# Patentansprüche

1. Verfahren zur Aufbereitung von Altglas für die Verarbeitung zu Scherben durch Zerkleinerung, Trockenabsiebung, Magnetscheidung und gegebenenfalls optische Sortierung, dadurch gekennzeichnet, dass man nach der Trennung des Feinen und der Grobstücke die Mittelpartie der Rohcharge in mehrere granulometrische Schnitte unterteilt, auf deren jeden man getrennt die Zerkleinerung und dann die Absiebung anwendet, wobei die Zerkleinerung in einer vorsichtigen Weise durchgeführt wird, die während der Absiebung die Trennung in :
   - eine untere brauchbare Fraktion,
   - eine obere zu verwerfende Fraktion und
   - eine mittlere vollständiger zu behandelnde Fraktion erlaubt.

2. Verfahren nach Anspruch 1, dadurch gekennzeichnet, dass zwei Mittelschnitte vorgesehen werden und ein optisches manuelles Aussortieren der unschmelzbaren Bestandteile vor der Zerkleinerung und Absiebung bei ihnen durchgeführt wird.

3. Verfahren nach Anspruch 2, dadurch gekennzeichnet, dass der obere mittlere Schnitt nach dem Zerkleinern in drei entsprechenden granulometrischen Fraktionen von 0 bis 10 mm, 10 bis 25 mm, 25 bis 40 mm und der untere mittlere Schnitt in drei entsprechenden granulometrischen Fraktionen von 0 bis 10 mm, 10 bis 15 mm, 15 bis 25 mm abgesiebt werden.

4. Verfahren nach Anspruch 3, dadurch gekennzeichnet, dass die mittlere Fraktion des oberen mittleren Schnitts dem unteren mittleren Schnitt zwischen dem optischen Aussortieren und dem Zerkleineren wieder zugemischt wird, worauf die Absiebung des letzteren erfolgt.

5. Verfahren nach einem der Ansprüche 3 und 4, dadurch gekennzeichnet, dass die mittlere Fraktion des unteren mittleren Schnitts durch optisches Sortieren gereinigt wird.

6. Verfahren nach einem der vorhergehenden Ansprüche, dadurch gekennzeichnet, dass die groben Stücke nach einer vorsichtigen Zerkleinerung, der sich eine Siebklassierung in zwei Fraktionen anschliesst, nämlich in eine untere verwertbare Fraktion und eine obere auszuscheidende Fraktion, aufbereitet werden.

7. Verfahren nach Anspruch 6, dadurch gekennzeichnet, dass das Feine in zwei Fraktionen, nämlich eine untere, auf weniger als 2 mm zerkleinerte Fraktion und eine obere, durch optisches Aussortieren gereinigte Fraktion aufbereitet wird.

# Claims

1. Method of purifying recovered glass, for making cullet by pulverisation, dry screening, magnetic sorting and optionally optical sorting, characterised in that after separation of fines and large pieces the median part of the crude charge is divided into a plurality of granulometric portions which are separately subjected to pulverisation and screening, said pulverisation being carried out in a controlled manner which allows separation during screening of:
   - a usable lower fraction
   - an upper fraction to be rejected
   - a middle fraction to be treated further.

2. Method according to claim 1, characterised in that the median portions are two in number and manual optical sorting of infusibles is carried out on both of them before pulverisation and screening.

3. Method according to claim 2, characterised in that the upper median portion is screened after pulverisation into three granulometric fractions respectively of 0 to 10 mm, 10 to 25 mm and 25 to 40 mm, and the lower median portion into three granulometric fractions respectively of 0 to 10 mm, 10 to 15 mm and 15 to 25 mm.

4. Method according to claim 3, characterised in that the medium fraction of the upper median

**0 057 642**

portion is remixed with the lower median portion between the optical sorting and the pulverisation followed by screening of the latter.

5. Method according to one of claims 3 and 4, characterised in that the medium fraction of the lower median portion is purified by optical sorting.

6. Method according to one of the preceding claims, characterised in that the large pieces are recovered after a controlled pulverisation followed by screening into two fractions, that is a usable lower fraction and an upper fraction to be rejected.

7. Method according to claim 6, characterised in that the fines are recovered in two fractions, the lower fraction pulverised to less than 2 mm and the upper fraction purified by optical sorting.

Fig. 1

Fig. 2

DECHETS FINS                    DECHETS GROSSIERS